# EUROPEAN PATENT SPECIFICATION

(11) **EP 3 425 793 B1**
(45) Date of publication and mention of the grant of the patent: **12.02.2020**
(21) Application number: 18170737.3
(22) Date of filing: 04.05.2018
(51) Int. Cl.: H02S 20/23, E04D 12/00, E04D 13/16, E04D 13/17

(54) **ROOF SYSTEM**
DACHSYSTEM
SYSTÈME DE TOITURE

(30) Priority: 05.07.2017 NL 2019185
(43) Date of publication of application: 09.01.2019
(73) Proprietor: N.V. Nuon Sales Nederland, 1102 BR Amsterdam (NL)
(72) Inventor: WOLFSWINKEL, Willem Wouterus Haijo, 1019 AW Amsterdam (NL)
(74) Representative: Van Breda, Jacobus

(56) References cited:
- EP-A2- 0 183 266
- WO-A1-2008/098048
- DE-T2- 60 220 760
- US-A1- 2008 209 822
- US-A1- 2011 030 287

## Description

The invention relates to a roof system according to the preamble of claim 1.

Such a roof system is known from EP 0 183 266; US2011/0030287; US2008/0209822; WO2008/098048; and DE 602 20 760. The roof system of US 2011/0030287 discloses the features of the preamble of claim 1.

In the prior art of providing a watertight roof system, first an isolation layer is provided and on top of that a watertight covering layer is provided in the form of roof tiles and/or solar cell plates or PV panels. The incorporation of solar cell plates or PV-panels as part of the watertight covering layer poses a risk in that the solar cell plates may possibly not provide a watertight covering. Hence, the placement of solar cell plates or PV panels may result in leakages and the popularity of the solar cell plates may suffer therefrom, not in the least in circles of conventional suppliers of roof systems for whom the conversion of solar energy into electrical energy is not a prime concern. To put it bluntly: roof suppliers are not interested in conversion of solar energy into electrical energy, and suppliers of solar cell or PV panels are not interested in securing water tightness of the roof covering.

It is an object of the invention to provide security to both suppliers of roof systems and suppliers of solar cell panels that their joint application will not go at the expense of the water tightness of the roof system.

For this purpose according to the invention a roof system and a method of providing such a roof system are proposed in accordance with one or more of the appended claims.

First and foremost according to the invention a roof system according to claim 1 is proposed. To keep installation cost low and fool proof the intermediate layer is build up from a single standard core component complemented with at most four mutually different ancillary components that each differ from the single standard core component, wherein the standard core component and one or more of the mutually different ancillary components are substantially in a same plane placeable adjacent to each other as part of the intermediate layer to meet the requirements of specific situations.

According to the invention the core component is applied directly on top of a roof deck in form of insulation deck plates of the isolation layer and is provided with an overlap region to enable easy and unambiguous placement of neighbouring elements selected from the group of the standard core component and the mutually different ancillary components, wherein the core component has a preformed breaking strip along a side flange. Where two prefab insulated deck plates meet, two counter battens will meet in parallel together making a double width counter batten. Therefore the raised edge on a side of the core component is twice as wide as a single counter batten. However, the middle counter batten of the deck plate requires a single width flange only. The pre-formed breaking strip along the flange of the core component enables the roofer to break the unnecessary part of the strip from the element by just putting pressure on it.

Preferably all components should be self-explanatory and mounting should require only standard material and equipment already used by both suppliers of roof systems and by suppliers of PV-systems. By making the intermediate layer watertight, this water tightness is no longer required from the roof tiles which normally provide this function. This also means that the challenge then no longer exists to incorporate solar cell panels or PV panels in an existing roof system with tiles, without sacrificing water tightness. After placement of the watertight intermediate layer the roof system can be finished with conventional tiles in combination with solar cell or PV panels, and there is no need to pay particular attention to maintaining water tightness of the roof system construction. The invention enables the solar system to be integrated in the roof. This creates a more visually attractive result. Hence the solution according to the invention increases the addressable solar PV market.

Preferably at least the standard core component and one or more of the ancillary components of the intermediate layer has protrusions extending towards the isolation layer in order to leave room between the isolation layer and the intermediate layer so as to allow the escape of damp or fumes. Any damp or fume can thus leave the roof system which counters the growth or development of fungus. Further the core component is preferably provided with longitudinal rain water channels that are formed on the opposite side of the protrusions. This has the advantage that rainwater on the element is quickly guided tot the gutter through the vertical cannels. In this process dirt is also flushed from the component so no debris can build up.

It is preferred - though not required - that the intermediate layer is of UV-resistent high density poly-ethylene. This is a relatively low cost material which is easy to process and which maintains its water tightness over time. Of course any like material with the required characteristics to enable thermal moulding of the elements described herein and guaranteeing similar characteristics with respect to durability and craftability can be applied.

The preformed overlap of the elements allows for easy and unambiguous placement of the elements and filling over the roof surface. The overlap also serves as a barrier for capillary water. The core component acts as water proof and water guiding layer in-between the deck and the PV-system. The core component provides aeration of the underlying deck and guidance of condense water to a conventional horizontal gutter. The PV-system is mounted on top of a series of core components. The core component has been dimensioned in such a way that it is applicable on the majority of the currently available prefab insulation deck plates.

Preferably one of the ancillary components is a gutter element which is designed for application on the left or on the right of the core component, wherein the gutter element has an overlap region that cooperates with an overlap region of a core component. The preformed overlap allows for easy and unambiguous placement of the elements and filling over the roof surface. The overlap also serves as a barrier for capillary water.

The gutter element can be applied on both the left hand side and on the right hand side of the roof and is an optional element which is applied in situations in which the prefab insulation deck plate increases the roof thickness compared to that of a directly adjacent roof deck. This may for instance occur on post-insulation of a terraced house. The gutter element of the invention provides vertical guidance of the rainwater to a horizontal gutter. The gutter element has a primary weir that is formed as a curled outer edge of the gutter element to guide rainwater to a gutter.

With a primary weir present it is preferable that the gutter element further has a secondary weir so as to provide a controlled flow of rainwater to the primary weir. This prevents the primary weir from receiving an over-supply of rainwater.

It is further preferred that one of the ancillary components is a coupling element for providing a connection between the gutter element and the core component, wherein the coupling element has an overlap region that cooperates with corresponding overlap regions of the gutter element and the core component, and wherein the coupling element is provided with a breaking strip on both sides of the element to enable converting the coupling element for either left application or right application. When applied to an integral insulated deck plate, the element is prepared for left or right placement by means of removing the appropriate breaking strip. Placed on the left-hand side, the element is then slid underneath the raised edge of the core component. Placed on the right-hand side, the element is mounted on top of the raised edge of the core component. When applied to a non-integral insulated deck plate, the element is slid underneath the core component. If necessary the (vertical) height of the element can be reduced by means of a hand saw. This in normally the case when less thick insulated deck plate is used. The preformed overlap allows for easy and unambiguous placement of the elements and filling over the roof surface. The overlap also serves as a barrier for capillary water.

Preferably further one of the ancillary components is a skylight element for guiding rainwater, which skylight element has an overlap region for cooperation with a corresponding overlap region of the core element, and which skylight element is provided with rain water channels on an upper side, wherein at an opposite side the rain water channels form the protrusions that leave room by creating a small air gap between the roof deck and the bottom of the skylight element between the protrusions, for aeration below the skylight element. As a result condensation on the roof deck is prevented. Rainwater on the element is quickly guided to the gutter through the vertical cannels. The preformed overlap allows for easy and unambiguous placement of core components both underneath and on top of the skylight element. The overlap also serves as a barrier for capillary water.

The skylight element is applied on the upper-side of a skylight. The exact position of the skylight is variable as long as it is fully within the boundaries of the width of the horizontal weir strip of the skylight element. The counter battens of the deck plates at the position of the skylight element must be removed over the length of the skylight element. This can be done using a hand saw.

Preferably the skylight element has a raised mounting edge forming a flange. The height of the flange is so that a batten will fit underneath the edge and can pass through to the adjacent core components.

Preferably one of the auxiliary components is a duct element which is applicable in a field of core elements to provide a duct. Further the invention provides a method for providing a watertight roof system according to claim 9, comprising the step of providing an isolation layer and providing a watertight covering layer on top of the isolation layer, and arranging that an intermediate watertight layer is provided directly on top of the isolation layer, wherein said intermediate layer provides support for a finishing layer of roof tiles and/or solar cell plates or PV panels. According to the invention this method provides that the intermediate layer is build up from a single standard core component and is complemented with at most four mutually different ancillary components that each differ from the single standard core component, wherein the standard core component and one or more of the different ancillary components are placed substantially in a same plane and adjacent to each other to meet requirements of a specific situation, whereby the core component is applied directly on top of a roof deck in form of insulation deck plates of the isolation layer and is provided with an overlap region to enable easy and unambiguous placement of neighbouring elements selected from the group of the standard core component and the mutually different ancillary components, and wherein said core component has a preformed breaking strip along a side flange.

The invention will hereinafter be further elucidated with reference to the drawing of an exemplary embodiment of roof system according to the invention that is not limiting as to the appended claims.

In the drawing:
- figure 1 shows an overview of the components of a roof system according to the invention;
- figure 2 shows a core component of the roof system's intermediate layer;
- figure 3 shows a gutter element of the roof system's intermediate layer;
- figure 4 shows a coupling element of the roof system's intermediate layer;
- figure 5 shows a skylight element of the roof system's intermediate layer;
- figure 6 shows a duct element of the roof system's intermediate layer; and
- figure 7 shows the roof system of the invention.

Whenever in the figures the same reference numerals are applied, these numerals refer to the same parts.

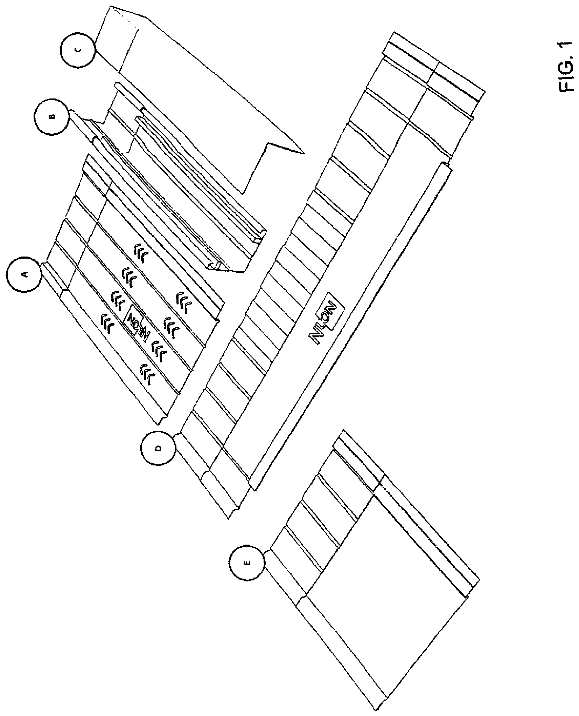

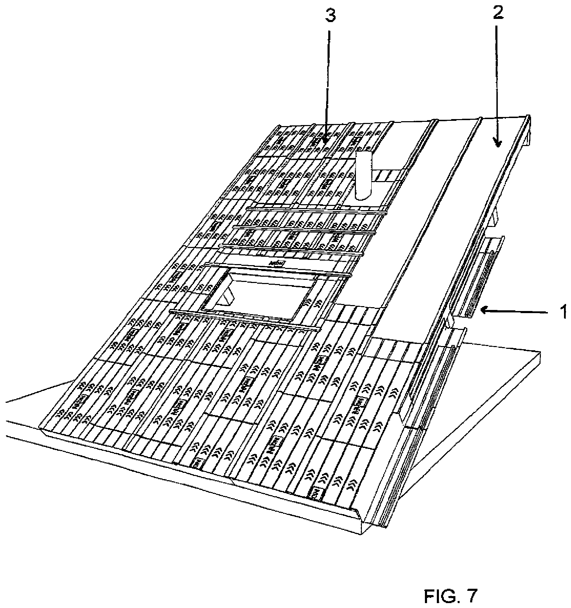

Figure 1 provides a view at the separate components of a roof system according to the invention, whereas figure 7 shows a mounted roof system 1 of the invention wherein the roof system 1 comprises an isolation layer 2. The roof system 1 of the invention essentially relates to an intermediate layer 3 which is watertight and which is construed from several components to be explained hereinafter. Because the intermediate layer 3 is watertight in principle it may suffice as a top layer, but usually an upper layer (not shown) comprising roof tiles and/or solar cell or PV plates are provided on top of the intermediate layer 3. Essential is however that the intermediate layer 3 is watertight.

Figure 1 shows the separate components of the roof system according to the invention, and shows respectively a core component A; a gutter element B; a coupling element C; a skylight element D; and a duct element E.

The core component A is applied directly on top of a roof deck of prefab insulation deck plates forming the isolation layer 2 shown in figure 7. The core component A acts as water proof and water guiding layer in-between the deck and the PV-system. Also the core component A provides aeration of the underlying deck and guidance of condense water to a horizontal gutter. The PV-system can be mounted on top of an assembly of core components. The core component has been dimensioned in such a way it is applicable on the majority of the available prefab insulation deck plates.

The gutter element B is an optional element which is applied in situations in which the prefab insulation deck plate has a higher roof thickness compared to that of a directly adjacent roof deck. The gutter element B of the invention provides vertical guidance of the rainwater to a horizontal gutter. The gutter element can be applied on both the left hand side and on the right hand side of the roof.

The coupling element C acts as a waterproof connection between the core component A and the gutter element B and is required when a gutter element B is applied. The coupling element C can be applied on both the left hand side and the right hand side of the roof. Also the coupling element C can be used as a fascia to compensate the increased roof thickness when a prefab insulation deck plate is used.

When a skylight is incorporated in the PV-system, a skylight element D needs to be applied. The skylight element D is placed on the upper side of the skylight and guides rainwater to the sides of the skylight onto the core components A which will further guide the rainwater to a gutter.

The duct element E is an optional element which is applied in a field of core components A. The duct element E is to be placed where a duct or vent needs to be realised. On top of the duct element E universal roof flashings can be applied.

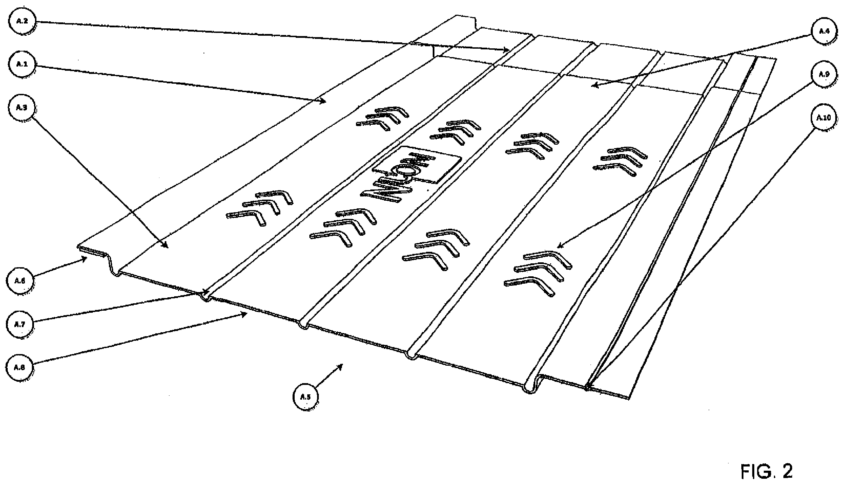

In figure 2 features of the core component A are shown.

The core component A is preferably constructed from a single piece of thermal moulded UV-resistant plastic - such as HDPE - with a life expectancy of at least 30 years. It has a preformed overlap A2 which allows for easy and unambiguous placement of the different components of the roof system and filling over the roof surface. The overlap A2 also serves as a barrier for capillary water. One of the environmental advantages is that the top element A4 in a row can be sawn with a hand saw and be used as the lower element in a next row, thus minimising waste.

The core component A is dimensioned with respect to the standard sizing of the prefab insulated deck plates of the current top three manufacturers of these deck plates. This makes it possible to apply the core components on the majority of the prefab insulated deck plates that are in use today, so that one size fit's (almost) all. The height of the edges A5 of the elements matches that of the counter battens of these deck plates as well as the width of the counter battens and the area in-between the counter battens. The core component A can also fit the counter battens of a non-insulated roof deck.

Where the core component A covers the counter battens, foam-band A6 ensures an additional watertight coupling besides the raised edges A5 of the core component.

The core component A is mounted on the counter battens by means of self-tapping screws with EPDM or neoprene washers. The battens - if necessary - as well as the PV-panel mounting rails are mounted straight through the raised edges A5 of the core component A into the counter battens in a similar way using EPDM washers to guarantee watertightness. Using screws instead of nails ensures that more wind load can be handled by the roof.

Figure 2 further shows that rainwater on the core component A is quickly guided to the gutter through the vertical channels A7. In this process dirt is also flushed from the elements so no debris can build up. The vertical channels A7 also ensure aeration of the elements on the opposite side of the core component A by creating a small air gap between the roof deck and the bottom of the core component A. As a result condensation on the roof deck is prevented.

Where two prefab insulated deck plates meet, two counter battens will meet in parallel together making a double width counter batten. Therefore one of the raised edges A10 of the core component A is twice as wide as a single counter batten. However, the middle counter batten of the deck plate requires a single width flange. A pre-formed breaking strip along the flange enables the roofer to break the unnecessary part of the strip from the core component A by just putting pressure on it.

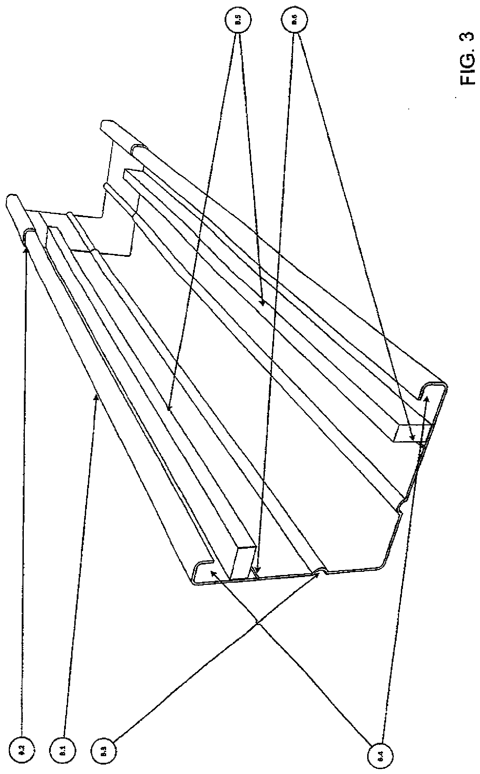

Figure 3 shows the details of the gutter element B.

The gutter element B is constructed from a single piece of thermal moulded UV-resistant plastic - such as HDPE - with a life expectancy of at least 30 years.

The preformed overlap B2 allows for easy and unambiguous placement of the elements and filling over the roof surface. The overlap B2 also serves as a barrier for capillary water.

The semi-circular detail B3 strengthens the gutter element B and prevents wind pushed water from reaching the top of the element. The gutter element B is connected to the insulated deck plates by means of self-drilling hexagon collars with a coarse pitch and sufficient length. These are screwed straight through the elements in the area above the reinforcement into the insulation layer of the deck plate.

The gutter element B preferably has a primary weir B4 and a secondary weir B5. The primary weir B4 is formed by the curled outer edge of the element and guides rainwater to the gutter. In case of heavy rainfall, the raised open-cell foam band B5 acts as a secondary weir and provides a controlled flow of rainwater to the primary weir B4. This prevents the primary weir B4 from receiving an over-supply of rainwater.

The gutter element B can be applied on both the left-hand side and the right-hand side of an insulated deck plate. By means of a breaking strip B6 along the secondary weir, the unnecessary weir can be removed easily.

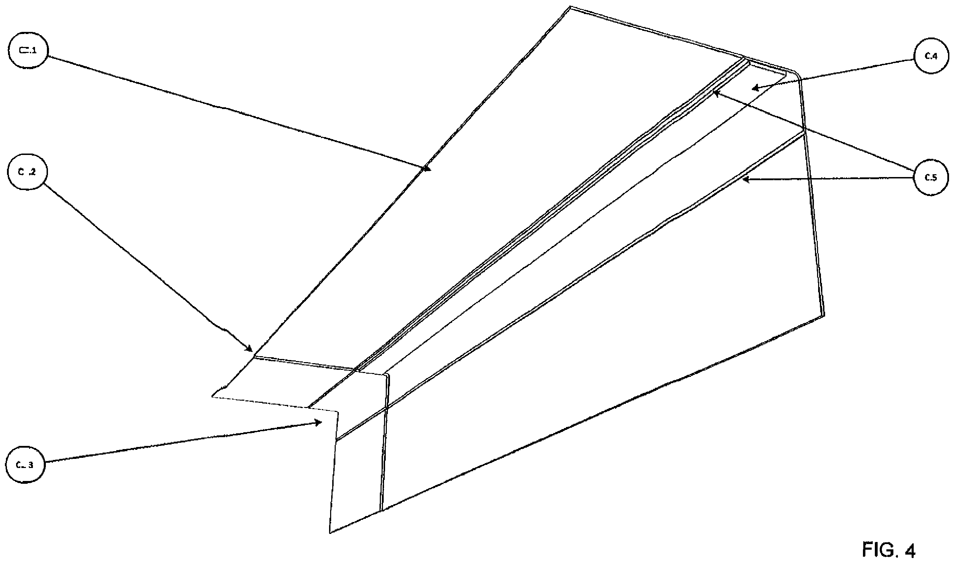

Turning now to figure 4, it shows the coupling element C. The coupling element C is constructed from a single piece of thermal moulded UV-resistant plastic - such as HDPE - with a life expectancy of at least 30 years.

The coupling element C has a preformed overlap C2 that allows for easy and unambiguous placement of the elements and filling over the roof surface. The overlap also serves as a barrier for capillary water.

The coupling element C can be applied on both the left-hand side and the right-hand side of an insulated deck plate.

When applied to an integral insulated deck plate, the coupling element C is prepared for left or right placement by means of removing the appropriate breaking strip C5. Placed on the left-hand side, the element is then slid underneath the raised edge of the core component A. Placed on the right-hand side, the element is mounted on top of the raised edge of the core component A. When applied to a non-integral insulated deck plate, the element is slid underneath the core component A. If necessary the (vertical) height of the element can be reduced by means of a hand saw. This is normally the case when less thick insulated deck plate is used.

When mounted on the top of the core component's raised edge A5, the foam compound C4 provides a waterproof seal. The coupling element C can be applied on both the left-hand side and the right-hand side of an insulated deck plate. By means of a breaking strip C5 on both sides of the element, the unnecessary section can be removed easily.

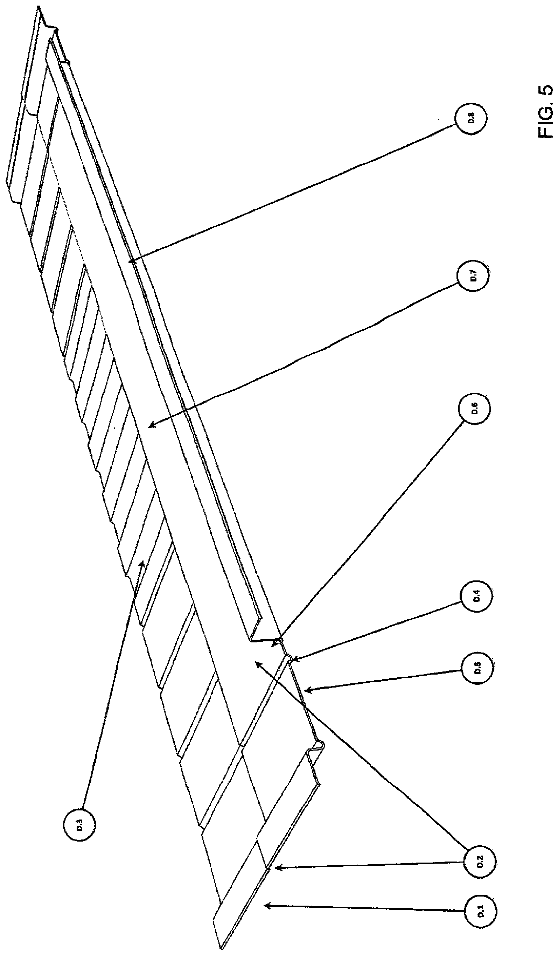

Figure 5 shows the skylight element D of the invention.

The skylight element D is constructed from a single piece of thermal moulded UV-resistant plastic - such as HDPE - with a life expectancy of at least 30 years.

The skylight element D is applied on the upper-side of a skylight. The exact position of the skylight is variable as long as it is fully within the boundaries of the width of the horizontal weir strip D7 of the skylight element. The counter battens of the deck plates at the position of the skylight element D, must be removed over the length of the skylight element D. This can be done using a hand saw.

The preformed overlap D2 allows for easy and unambiguous placement of a core component A both underneath and on top of the skylight element. The overlap D2 also serves as a barrier for capillary water.

The skylight element D always connects to three upper core components A and therefore always holds on two prefab insulation deck plates. The increased width of the vertical rainwater channels D3 of the middle section of the skylight element D always captures the core component shift created by the double counter battens created by two contiguous deck plates.

Rainwater on the skylight element D is quickly guided to a gutter through further vertical cannels D4. In this process dirt is also flushed from the elements so no debris can build up.

The vertical channels D5 also ensure aeration of the skylight elements D by creating a small air gap between the roof deck and the bottom of the skylight element D. As a result condensation on the roof deck is prevented.

Rainwater is diverted via a raised edge D8 towards the core components adjacent to the bottom of the skylight element D. The width of the underlying core components is adjusted to the position of the skylight.

A flat part D7 of the skylight element D forms an obstacle-free space over which rainwater is rapidly discharged. A side of the skylight element D is provided with a flange so that a batten will fit underneath the edge D8 of the flange and can pass through to the adjacent core components.

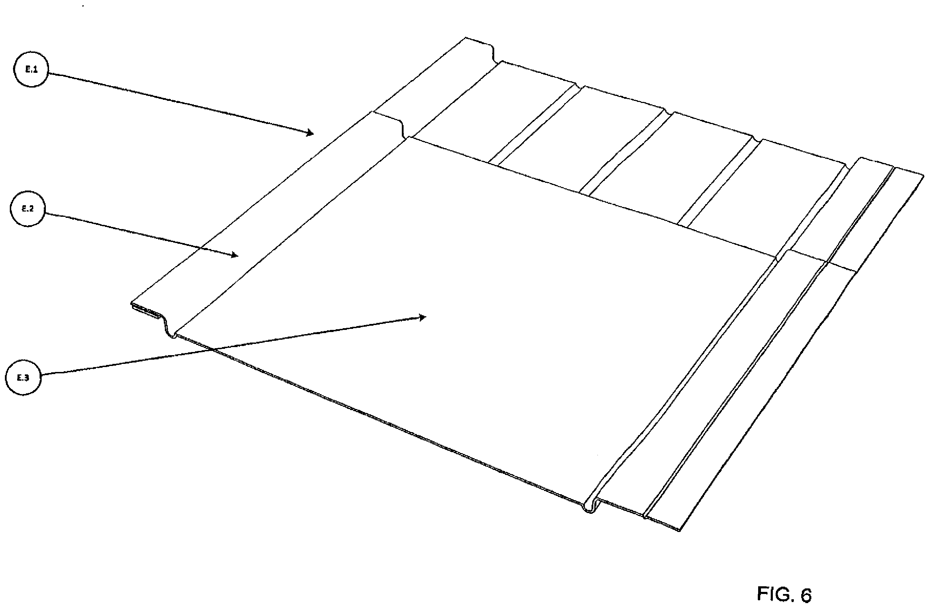

Finally figure 6 shows the duct element E of the invention. The element is constructed from a single piece of thermal moulded UV-resistant plastic - such as HDPE - with a life expectancy of at least 30 years.

The mounting of the duct element E is similar to mounting of the core component A. Also the characteristics of the duct element E are identical to those of the core component A.

A duct can be realised in a flat duct area E3. The exact position and diameter of the duct to be realised are irrelevant as long as it is within the duct area.

Although the invention has been discussed in the foregoing with reference to an exemplary embodiment of the roof system of the invention, the invention is not restricted to this particular embodiment which can be varied in many ways without departing from the invention. The discussed exemplary embodiment shall therefore not be used to construe the appended claims strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment.

## Claims

1. Roof system (1) comprising an isolation layer (2) and a covering layer, wherein a watertight intermediate layer (3) is provided below the covering layer, wherein the intermediate layer (3) is build up from a single standard core component (A) complemented with at most four mutually different ancillary components (B, C, D, E) that each differ from the single standard core component (A), wherein the standard core component (A) and one or more of the mutually different ancillary components (B, C, D, E) are substantially in a same plane placeable adjacent to each other as part of the intermediate layer (3) to meet requirements of a specific situation, and wherein all said ancillary components (B, C, D, E) are processable with a hand saw, **characterized in that** the core component (A) is applied directly on top of a roof deck in the form of of insulation deck plates of the isolation layer and is provided with an overlap region (A2) to enable easy and unambiguous placement of neighbouring elements selected from the group of the standard core component (A) and the mutually different ancillary components (B, C, D, E), and wherein said core component (A) has a pre-formed breaking strip (A10) along a side flange.

2. Roof system according to claim 1, **characterized in that** at least the standard core component (A) and one or more of the ancillary components (B, C, D, E) of the intermediate layer (3) have protrusions extending towards the isolation layer in order to leave room (A8) between the isolation layer and the intermediate layer (3) so as to allow the escape of damp or fumes, wherein the core component (A) is provided with longitudinal rain water channels (A7) that on an opposite side form the protrusions extending towards the isolation layer in order to leave room (A8) between the isolation layer and the core component (A).

3. Roof system according to claim 1 or 2, **characterized in that** one of the ancillary components (B, C, D, E) is a gutter element (B) which is designed for application on the left and on the right of the core component (A), wherein the gutter element (B) has an overlap region (B2) that cooperates with an overlap region (A2) of a core component (A), and wherein the gutter element (B) has a primary weir (B4) that is formed as a curled outer edge of the gutter element to guide rainwater to a gutter.

4. Roof system according to claim 3, **characterized in that** the gutter element (B) has a secondary weir (B5) so as to provide a controlled flow of rainwater to the primary weir (B4) .

5. Roof system according to any one of claims 3 - 4, **characterized in that** one of the ancillary components (B, C, D, E) is a coupling element (C) for providing a connection between the gutter element (B) and the core component (A), wherein the coupling element (C) has an overlap region (C2) that cooperates with corresponding overlap regions (A2, B2) of the gutter element (B) and the core component (A), and wherein the coupling element (C) is provided with a breaking strip (C5) on both sides of the element to enable converting the coupling element (C) for either left application or right application.

6. Roof system according to claim 2 and optionally any one of claims 3 - 5, **characterized in that** one of the ancillary components (B, C, D, E) is a skylight element (D) for guiding rainwater, wherein the skylight element (D) has an overlap region (D2) for cooperation with a corresponding overlap region (A2) of the core element (A), and wherein said skylight element (D) is provided with rain water channels (D4) on an upper side, wherein at an opposite side the rain water channels (D4) form the protrusions that provide room (D5) for aeration below the skylight element (D).

7. Roof system according to claim 6, **characterized in that** the skylight element (D) has a raised mounting edge (D8).

8. Roof system according to any one of claims 1 - 7, **characterized in that** one of the ancillary components (B, C, D, E) is a duct element (E) which is applicable in a field of core elements (A) to provide a duct.

9. Method for providing a watertight roof system (1), comprising the step of providing an isolation layer (2) and providing a watertight covering layer on top of the isolation layer (2), and arranging that an intermediate watertight layer (3) is provided directly on top of the isolation layer (2), and that said intermediate layer (3) provides support for a finishing layer of roof tiles and/or solar cell plates or PV panels, providing that the intermediate layer (3) is build up from a single standard core component (A) and is complemented with at most four mutually different ancillary components (B, C, D, E) that each differ from the single standard core component (A), wherein the standard core component (A) and one or more of the different ancillary components (B, C, D, E) are placed substantially in a same plane and adjacent to each other to meet requirements of a specific situation **characterized by** providing that the core component (A) is applied directly on top of a roof deck in form of of insulation deck plates of the isolation layer and providing the core component (A) with an overlap region (A2) to enable easy and unambiguous placement of neighbouring elements selected from the group of the standard core component (A) and the mutually different ancillary components (B, C, D, E), and providing that said core component (A) has a preformed breaking strip (A10) along a side flange.

## Patentansprüche

1. Dachsystem (1) mit einer Isolationsschicht (2) und einer Deckschicht, wobei unter der Deckschicht eine wasserdichte Zwischenschicht (3) vorgesehen ist, wobei die Zwischenschicht (3) aus einer einzigen Standardkernkomponente (A) aufgebaut ist, die mit höchstens vier voneinander verschiedenen Nebenkomponenten (B, C, D, E) ergänzt ist, die sich jeweils von der einzelnen Standardkernkomponente (A) unterscheiden, wobei die Standardkernkomponente (A) und eine oder mehrere der voneinander verschiedenen Nebenkomponenten (B, C, D, E) im Wesentlichen in einer gleichen Ebene angeordnet sind, die als Teil der Zwischenschicht (3) benachbart zueinander angeordnet werden kann, um den Anforderungen einer bestimmten Situation gerecht zu werden, und wobei alle besagten Nebenkomponenten (B, C, D, E) mit einer Handsäge bearbeitbar sind, **dadurch gekennzeichnet, dass** die Kernkomponente (A) direkt oben auf eine Dachterrasse in Form von Isolationsdeckplatten der Isolationsschicht aufgebracht und mit einem Überlappungsbereich (A2) versehen ist, um eine einfache und eindeutige Platzierung benachbarter Elemente, ausgewählt aus der Gruppe der Standardkomponente (A) und der voneinander verschiedenen Nebenkomponenten (B, C, D, E), zu ermöglichen, und wobei die besagte Kernkomponente (A) einen vorgeformten Unterbrechungsstreifen (A10) entlang eines Seitenflansches aufweist.

2. Dachsystem nach Anspruch 1, **dadurch gekennzeichnet, dass** mindestens die Standardkernkomponente (A) und eine oder mehrere der Nebenkomponenten (B, C, D, E) der Zwischenschicht (3) Vorsprünge aufweisen, die sich in Richtung der Isolationsschicht erstrecken, um Raum (A8) zwischen der Isolationsschicht und der Zwischenschicht (3) zu lassen, um das Entweichen von Feuchtigkeit oder Rauch zu ermöglichen, wobei die Kernkomponente (A) mit länglichen Regenwasserkanälen (A7) versehen ist, die auf einer gegenüberliegenden Seite die sich zur Isolationsschicht hin erstreckenden Vorsprünge bilden, um Raum (A8) zwischen der Isolationsschicht und der Kernkomponente (A) zu lassen.

3. Dachsystem nach Anspruch 1 oder 2, **dadurch gekennzeichnet, dass** eine der Nebenkomponenten (B, C, D, E) ein Rinnenelement (B) ist, welches zur Anwendung links und rechts der Kernkomponente (A) ausgelegt ist, wobei das Rinnenelement (B) einen Überlappungsbereich (B2) aufweist, der mit einem Überlappungsbereich (A2) einer Kernkomponente (A) zusammenwirkt, und wobei das Rinnenelement (B) ein Primärwehr (B4) aufweist, das als gewellter Außenrand des Rinnenelements ausgebildet ist, um Regenwasser zu einer Rinne zu leiten.

4. Dachsystem nach Anspruch 3, **dadurch gekennzeichnet, dass** das Rinnenelement (B) ein Sekundärwehr (B5) aufweist, um einen kontrollierten Fluss des Regenwassers zum Primärwehr (B4) zu gewährleisten.

5. Dachsystem nach einem der Ansprüche 3 - 4, **dadurch gekennzeichnet, dass** eine der Nebenkomponenten (B, C, D, E) ein Kopplungselement (C) zum Bereitstellen einer Verbindung zwischen dem Rinnenelement (B) und der Kernkomponente (A) ist, wobei das Kopplungselement (C) einen Überlappungsbereich (C2) aufweist, der mit entsprechenden Überlappungsbereichen des Rinnenelements (B) und der Kernkomponente (A) zusammenwirkt, und wobei das Kopplungselement (C) mit einem Unterbrechungsstreifen (C5) auf beiden Seiten des Elements versehen ist, um das Umwandeln des Kopplungselements (C) entweder für die linke Anwendung oder rechte Anwendung zu ermöglichen.

6. Dachsystem nach Anspruch 2 und wahlweise einer der Ansprüche 3 - 5, **dadurch gekennzeichnet, dass** eine der Nebenkomponenten (B, C, D, E) ein Oberlichtelement (D) zur Führung von Regenwasser ist, wobei das Oberlichtelement (D) einen Überlappungsbereich (D2) zur Zusammenarbeit mit einem entsprechenden Überlappungsbereich (A2) des Kernelements (A) aufweist, und wobei das besagte Oberlichtelement (D) auf einer Oberseite mit Regenwasserkanälen (D4) versehen ist, wobei auf einer gegenüberliegenden Seite die Regenwasserkanäle (D4) die Vorsprünge bilden, die unter dem Oberlichtelement (D) Raum (D5) für die Belüftung bieten.

7. Dachsystem nach Anspruch 6, **dadurch gekennzeichnet, dass** das Oberlichtelement (D) einen erhöhten Montagerand (D8) aufweist.

8. Dachsystem nach einem der Ansprüche 1 - 7, **dadurch gekennzeichnet, dass** eine der Nebenkomponenten (B, C, D, E) ein Kanalelement (E) ist, das in einem Feld von Kernelementen (A) zum Bereitstellen eines Kanals einsetzbar ist.

9. Verfahren zum Bereitstellen eines wasserdichten Dachsystems (1), umfassend den Schritt des Bereitstellens einer Isolationsschicht (2) und des Bereitstellens einer wasserdichten Deckschicht auf der Oberseite der Isolationsschicht (2) und das Anordnen, dass eine wasserdichte Zwischenschicht (3) direkt auf der Oberseite der Isolationsschicht (2) bereitgestellt wird, und dass die besagte Zwischenschicht (3) eine Deckschicht aus Dachziegeln und/oder Solarzellenplatten oder PV-Modulen trägt, wobei bereitgestellt wird, dass die Zwischenschicht (3) aus einer einzigen Standardkernkomponente (A) aufgebaut ist und mit höchstens vier voneinander verschiedenen Nebenkomponenten (B, C, D, E) ergänzt ist, die sich jeweils von der einzelnen Standardkernkomponente (A) unterscheiden, wobei die Standardkernkomponente (A) und eine oder mehrere der verschiedenen Nebenkomponenten (B, C, D, E) im Wesentlichen in einer gleichen Ebene und angrenzend aneinander angeordnet sind, um den Anforderungen einer bestimmten Situation gerecht zu werden **gekennzeichnet durch** das Bereitstellen, dass die Kernkomponente (A) direkt auf einer Dachterrasse in Form von Isolationsdeckplatten der Isolationsschicht aufgebracht wird und das Bereitstellen der Kernkomponente (A) mit einem Überlappungsbereich (A2), um eine einfache und eindeutige Platzierung benachbarter Elemente, ausgewählt aus der Gruppe der Standardkernkomponente (A) und der voneinander verschiedenen Nebenkomponenten (B, C, D, E), zu ermöglichen, und vorausgesetzt, dass die Kernkomponente (A) einen vorgeformten Unterbrechungsstreifen (A10) entlang eines Seitenflansches aufweist.

## Revendications

1. Système de toiture (1) comprenant une couche d'isolation (2) et une couche de couverture, dans lequel une couche intermédiaire étanche à l'eau (3) est prévue en dessous de la couche de couverture, dans lequel la couche intermédiaire (3) est élaborée à partir d'un composant de noyau standard unique (A) complété avec au plus quatre composants auxiliaires (B, C, D, E) mutuellement différents qui diffèrent chacun du composant de noyau standard unique (A), dans lequel le composant de noyau standard (A) et les un ou plusieurs des composants auxiliaires (B, C, D, E) mutuellement différents sont sensiblement dans un même plan, pouvant être placés de manière adjacente entre eux comme faisant partie de la couche intermédiaire (3) pour satisfaire les exigences d'une situation spécifique, et dans lequel tous lesdits composants auxiliaires (B, C, D, E) peuvent être traités avec une scie à main, **caractérisé en ce que** le composant de noyau (A) est appliqué directement sur le dessus d'un platelage de toit se présentant sous la forme de plaques de platelage d'isolation de la couche d'isolation et est prévu avec une région de chevauchement (A2) pour permettre une mise en place facile et non ambiguë d'éléments voisins sélectionnés dans le groupe du composant de noyau standard (A) et des composants auxiliaires (B, C, D, E) mutuellement différents, et dans lequel ledit composant de noyau (A) a une bande de rupture préformée (A10) le long d'une bride latérale.

2. Système de toiture selon la revendication 1, **caractérisé en ce qu'**au moins le composant de noyau standard (A) et un ou plusieurs des composants auxiliaires (B, C, D, E) de la couche intermédiaire (3) ont des saillies s'étendant vers la couche d'isolation afin de laisser de la place (A8) entre la couche d'isolation et la couche intermédiaire (3) pour permettre l'échappement de l'humidité ou des fumées, dans lequel le composant de noyau (A) est prévu avec des canaux d'eau de pluie longitudinaux (A7) qui, sur un côté opposé, forment les saillies s'étendant vers la couche d'isolation afin de laisser de la place (A8) entre la couche d'isolation et le composant de noyau (A).

3. Système de toiture selon la revendication 1 ou 2, **caractérisé en ce que** l'un des composants auxiliaires (B, C, D, E) est un élément de gouttière (B) qui est conçu pour être appliqué sur la gauche et sur la droite du composant de noyau (A), dans lequel l'élément de gouttière (B) a une région de chevauchement (B2) qui coopère avec une région de chevauchement (A2) d'un composant de noyau (A), et dans lequel l'élément de gouttière (B) a un déversoir principal (B4) qui est formé comme un bord externe enroulé de l'élément de gouttière pour guider l'eau de pluie vers une gouttière.

4. Système de toiture selon la revendication 3, **caractérisé en ce que** l'élément de gouttière (B) a un déversoir secondaire (B5) afin de fournir un écoulement contrôlé d'eau de pluie vers le déversoir principal (B4).

5. Système de toiture selon l'une quelconque des revendications 3 à 4, **caractérisé en ce que** l'un des composants auxiliaires (B, C, D, E) est un élément de couplage (C) pour fournir un raccordement entre l'élément de gouttière (B) et le composant de noyau (A), dans lequel l'élément de couplage (C) a une région de chevauchement (C2) qui coopère avec des régions de chevauchement (A2, B2) correspondantes de l'élément de gouttière (B) et du composant de noyau (A), et dans lequel l'élément de couplage (C) est prévu avec une bande de rupture (C5) des deux côtés de l'élément pour permettre de convertir l'élément de couplage (C) soit pour l'application à gauche soit pour l'application à droite.

6. Système de toiture selon la revendication 2 et facultativement l'une quelconque des revendications 3 à 5, **caractérisé en ce que** l'un des composants auxiliaires (B, C, D, E) est un élément de lanterneau (D) pour guider l'eau de pluie, dans lequel l'élément de lanterneau (D) a une région de chevauchement (D2) pour la coopération avec une région de chevauchement (A2) correspondante de l'élément de noyau (A), et dans lequel ledit élément de lanterneau (D) est prévu avec des canaux d'eau de pluie (D4) sur un côté supérieur, dans lequel au niveau d'un côté opposé, les canaux d'eau de pluie (D4) forment les saillies qui fournissent la place (D5) pour l'aération en dessous de l'élément de lanterneau (D) .

7. Système de toiture selon la revendication 6, **caractérisé en ce que** l'élément de lanterneau (D) a un bord de montage levé (D8).

8. Système de toiture selon l'une quelconque des revendications 1 à 7, **caractérisé en ce que** l'un des composants auxiliaires (B, C, D, E) est un élément de conduit (E) qui est applicable dans un champ d'éléments de noyau (A) pour fournir un conduit.

9. Procédé pour fournir un système de toiture étanche à l'eau (1) comprenant l'étape consistant à fournir une couche d'isolation (2) et l'étape consistant à fournir une couche de couverture étanche à l'eau sur le dessus de la couche d'isolation (2), et pour agencer de sorte qu'une couche intermédiaire étanche à l'eau (3) est prévue directement sur le dessus de la couche d'isolation (2), et que ladite couche intermédiaire (3) fournit le support pour une couche de finition de tuiles de toit et/ou de plaques de panneau solaire ou de panneaux PV, à condition que la couche intermédiaire (3) soit élaborée à partir d'un composant de noyau standard (A) et soit complétée avec au plus quatre composants auxiliaires (B, C, D, E) mutuellement différents qui diffèrent chacun du composant de noyau standard unique (A), dans lequel le composant de noyau standard (A) et un ou plusieurs des différents composants auxiliaires (B, C, D, E) sont placés sensiblement dans un même plan et adjacents entre eux pour satisfaire les exigences d'une situation spécifique, **caractérisé par** l'étape consistant à prévoir que le composant de noyau (A) est appliqué directement sur le dessus d'un platelage de toit se présentant sous la forme de plaques de platelage d'isolation de la couche d'isolation et l'étape consistant à prévoir le composant de noyau (A) avec une région de chevauchement (A2) pour permettre la mise en place facile et non ambiguë d'éléments voisins sélectionnés dans le groupe du composant de noyau standard (A) et des composants auxiliaires (B, C, D, E) mutuellement différents et l'étape consistant à prévoir que ledit composant de noyau (A) a une bande de rupture préformée (A10) le long d'une bride latérale.
